(19) **Europäisches Patentamt**

**European Patent Office**

**Office européen des brevets**

(11) **EP 0 784 413 B1**

(12) **FASCICULE DE BREVET EUROPEEN**

(45) Date de publication et mention
de la délivrance du brevet:
**30.10.2002 Bulletin 2002/44**

(51) Int Cl.⁷: **H04Q 11/00**

(21) Numéro de dépôt: **96402801.3**

(22) Date de dépôt: **18.12.1996**

(54) **Routeur N x N de longueur d'onde, procédé de routage optique et réseau de communication associé**

N x N Wellenlängenrouter, sowie Verfahren zur optischen Leitweglenkung und Kommunikationsnetz

N x N wavelength router and associated optical routing method and communication network

(84) Etats contractants désignés:
**DE FR GB**

(30) Priorité: **09.01.1996 FR 9600170**
**28.02.1996 FR 9602496**

(43) Date de publication de la demande:
**16.07.1997 Bulletin 1997/29**

(73) Titulaire: **HIGHWAVE OPTICAL TECHNOLOGIES**
**22300 Lannion (FR)**

(72) Inventeur: **Laude, Jean-Pierre**
**91690 St-Cyr-La-Riviere par Saclas (FR)**

(74) Mandataire: **Michelet, Alain et al**
**Cabinet Harlé et Phélip**
**7, rue de Madrid**
**75008 Paris (FR)**

(56) Documents cités:
**EP-A- 0 592 331**

- **PHOTONICS IN SWITCHING, vol. 16, 15 Mars 1993, PALM SPRINGS US, pages 196-198, XP000473862 SHARONY: " "Broadcast and switch" - A new class of WDM networks for high switching-speed, high connectivity applications"**
- **IEEE TRANSACTIONS ON PARALLEL AND DISTRIBUTED SYSTEMS, vol. 1, no. 2, Mai 1990, NEW YORK US, pages 47-53, XP000128311 FUJIWARA: "Line capacity expansion schemes in photonic switching"**
- **INTERNATIONAL SWITCHING SYMPOSIUM, vol. 3, 28 Mai 1990, STOCKHOLM SE, pages 21-26, XP000130869 HILL ET AL.: "A distributed wavelength switching architecture for the TPON local network"**
- **GLOBECOM '92, vol. 3, 6 Décembre 1992, ORLANDO US, pages 1593-1599, XP000390458 HAAS: "The "Staggering Switch": An "almost-all" optical packet switch"**

## Description

La présente invention concerne un routeur N x N de longueur d'onde, ainsi qu'un procédé de routage associé, plus particulièrement destinés à un réseau de communications.

Les importants développements de télétransmissions par voie optique amènent à connecter chaque usager à un centre d'émission ou de relais par l'intermédiaire de fibres optiques de transmission munies, à chacune de leurs extrémités, d'un composant optique destiné à relier l'émetteur de lumière modulée à la fibre pour y faire pénétrer la lumière, ou bien à l'autre extrémité, à recueillir la lumière pour la diriger vers un détecteur qui décodera le signal optique pour le transformer en un signal électrique ou électronique utilisable dans un récepteur usuel.

Les réseaux de télécommunications ainsi obtenus rendent nécessaire la réalisation de commutations en grand nombre par le biais de dispositifs complexes du type autocommutateur optique.

Pour parvenir à un tel autocommutateur optique, on a développé des composants spécifiques à N entrées et N sorties, aptes à relier une entrée quelconque à une sortie quelconque par ajustement de longueur d'onde. Ce composant, appelé routeur N x N de longueur d'onde ou WDM (Wavelength Division Multiplexer), comporte habituellement N éléments diffractants d'entrée reliés respectivement aux entrées, et N éléments diffractants de sortie disposés vis-à-vis des éléments diffractants d'entrée et reliés respectivement aux sorties. Chacun des éléments diffractants d'entrée est apte à produire pour un signal donné transmis à une longueur d'onde, une image disposée dans un plan focal correspondant à l'un quelconque des éléments diffractants de sortie. La sélection de l'élément de sortie est subordonnée à la longueur d'onde du signal.

A chaque couple fibre d'entrée-fibre de sortie, est donc associée une longueur d'onde de transmission. Le spectre global de transmission de l'ensemble du routeur N x N se présente ainsi sous la forme d'un peigne avec des dents situées à ces longueurs d'onde. Pour des éléments diffractants identiques disposés à intervalles égaux dans une ligne d'entrée et une ligne de sortie, 2N-1 longueurs d'onde distinctes sont utilisées dans le spectre de transmission.

Un inconvénient de ces routeurs traditionnels est leur encombrement et leur complexité, 2N éléments diffractants étant nécessaires.

De plus, les plages de longueurs d'onde situées entre les dents constituent des zones perdues. Etant donné que la bande spectrale utilisable est restreinte, il en résulte une limitation du nombre de longueurs d'onde de transmission. Le nombre possible d'usagers est ainsi considérablement restreint. A titre d'exemple, pour une bande spectrale totale limitée à 30 nm, et l'espacement entre deux longueurs d'onde de transmission étant de 1 nm, le nombre de longueurs d'onde de transmission ne peut dépasser 30, ce qui restreint le nombre d'usagers à une quinzaine.

D'autre part, les dents du spectre de transmission ont une largeur à mi-hauteur ou FWHM (Full Width Half-Maximum) habituellement faible par rapport à l'espacement entre longueurs d'onde de transmission, ce qui rend délicate la sélection d'une longueur d'onde d'émission, du fait que le positionnement dans une dent du spectre nécessite une grande précision.

Pour diminuer les zones perdues et augmenter la zone utile en longueurs d'onde, un moyen consiste à rapprocher le coeur des fibres. Le rapport R de la largeur à mi-hauteur des dents sur leur espacement augmente en effet avec le rapport du diamètre du coeur des fibres sur leur distance. Ainsi, le rapport R peut-il atteindre une valeur de 0,4 lorsque des fibres ayant des coeurs de diamètre 10 µm sont espacées successivement de 22 µm.

Cependant, de tels rapprochements de fibres s'avèrent techniquement limités, et entraînent de plus un phénomène de diaphotie, la lumière passant directement d'un coeur de fibre à un autre voisin.

Afin d'augmenter les capacités des routeurs, il a été proposé d'associer plusieurs routeurs élémentaires. Dans des dispositifs existants, les routeurs sont reliés en entrée à des coupleurs achromatiques par l'intermédiaire d'unités de multiplexage et de démultiplexage temporels. Les entrées de chacun des coupleurs peuvent ainsi être reliées aux entrées de chacun des routeurs au moyen d'un réseau d'interconnexions. La capacité du routeur ainsi obtenu est sensiblement accrue par rapport à celle des routeurs élémentaires, le nombre total d'usagers étant la somme des usagers prévus pour les différents routeurs élémentaires.

Cependant, un tel réseau produit des pertes importantes. De plus, il implique la mise en oeuvre de procédés complexes afin d'effectuer le multiplexage temporel. Par ailleurs, le problème précédemment évoqué de sélections de longueurs d'onde reste présent.

Le document SHARONY: « Broadcast and Switch » - « A new class of WDM networks for high switching-speed, high connectivity applications», PHOTONICS IN SWITCHING, vol. 16, 15 Mars 1993, PALM SPRINGS US, pages 196-198, divulgue un routeur optique à deux étages dont les « Wavelength Selective Switches » du deuxième étage reçoivent des signaux optiques multiplexés en provenance de chacun des coupleurs en étoile du premier étage.

La présente invention vise un routeur N x N de longueur d'onde valable pour un grand nombre d'usagers, impliquant de faibles pertes et simple à réaliser et à mettre en oeuvre.

La présente invention a également pour but un tel routeur N x N évitant tout problème de diaphotie, et ayant un rapport largeur à mi-hauteur sur espacement entre longueurs d'onde de transmission élevé.

La présente invention est également orientée vers un procédé de routage optique facile à mettre en oeuvre et évitant du brouillage entre signaux.

L'invention a aussi pour objectif un réseau de communications reposant sur des moyens optiques, valable pour un grand nombre d'usagers, fiable, impliquant de faibles pertes d'énergie, et simple à réaliser et à utiliser.

A cet effet, l'invention concerne un routeur N x N de longueur d'onde comportant N entrées et N sorties, destiné à transmettre des signaux optiques ayant chacun une longueur d'onde, des entrées vers les sorties. Le routeur N x N comporte également des moyens d'aiguillage aptes à aiguiller chacun des signaux optiques de l'une quelconque des N entrées vers l'une quelconque des N sorties en fonction de la longueur d'onde du signal.

Les moyens d'aiguillage comportent:

- n coupleurs m x m ayant chacun m entrées et m sorties, N étant égal à n X m et les N entrées des n coupleurs m x m étant les entrées du routeur N x N,
- m routeurs n x n ayant chacun n entrées et n sorties, chacune des n entrées étant reliée à une des sorties de, respectivement les n coupleurs m x m et les N sorties des m routeurs n x n étant les sorties du routeur N x N. Chacun des routeurs n x n est apte à aiguiller un signal optique ayant une longueur d'onde, de l'une quelconque de ses n entrées vers l'une quelconque de ses n sorties, en fonction de la longueur d'onde du signal, le routeur n x n ayant un spectre de transmission en fonction de la longueur d'onde sous forme d'un peigne.

Selon l'invention, les peignes des m routeurs n x n sont différents les uns des autres, de manière à rendre possible une sélection en fonction de la longueur d'onde pour une quelconque des N entrées du routeur N x N, à la fois d'un des m routeurs n x n et d'une des n sorties de ce routeur n x n.

On appelle spectre de transmission d'un routeur optique, la répartition spectrale du flux lumineux au niveau de ses sorties, produite par un flux lumineux de spectre étendu sur toute la bande de fonctionnement du routeur appliqué à l'ensemble de ses entrées.

Le routeur selon l'invention met en oeuvre des spectres différents selon les différents routeurs n x n rendant possible une sélection de la longueur d'onde, pour une entrée donnée, du routeur n x n concerné et au sein de celui-ci, de la voie de sortie visée. Ce dispositif ne rend donc nécessaire aucun multiplexage temporel et permet d'utiliser, en amont des routeurs n x n, un simple montage d'aiguillage de voies tel que celui revendiqué.

Dans sa globalité, le routeur N X N peut admettre un spectre de transmission sous forme de peigne avec des dents très rapprochées. Pour une plage donnée de longueurs d'onde utilisable, le nombre N d'entrée et de sorties peut ainsi être sensiblement augmenté, sans risque de diaphotie et sans problème technique particulier.

De plus, le rapport R pour le spectre de transmission global peut être considérablement accru. L'élargissement relatif de la largeur des dents permet donc une sélection de longueurs d'onde d'émission moins stricte que dans les dispositifs existants.

Plus le nombre de routeur n x n est grand, plus les dents de ce spectre peuvent être rapprochées, mais au prix d'une complexité accrue du montage.

Préférentiellement, le spectre de transmission de chacun des m routeurs n x n comprend des bandes de longueur d'onde et chacune de ces bandes comprenant des dents, les spectres de transmission des m routeurs n x n ont leurs bandes intercalées.

Cette configuration permet d'obtenir globalement un spectre de transmission comportant des bandes complémentaires en provenance des différents routeurs n x n. Ceci peut être particulièrement avantageux lorsque des longueurs d'onde de transmission sont regroupées par paquets dans chacun des routeurs n x n.

Dans un mode de réalisation avantageux de cette configuration, les peignes des m routeurs n x n ont leurs dents intercalées.

Dans ce cas, les dents du spectre global de transmission proviennent alternativement d'un routeur n x n distinct, ce qui permet d'obtenir par rapport à chacun des routeurs n x n pris isolément, un rapprochement des dents d'autant plus grand que le nombre de routeurs n x n est grand. Le rapport R peut être ainsi multiplié par m.

Dans une forme avantageuse de réalisation, le peigne de chacun des m routeurs n x n a des dents complètement dissociées des dents des autres peignes.

Les dents du spectre global de transmission peuvent ainsi être distinguées clairement les unes des autres, tout en étant proches. Des chevauchements des dents provenant des différents spectres des routeurs n x n sont cependant également possibles.

Selon un premier mode de réalisation du routeur N X N, chacun des coupleurs m x m est un coupleur achromatique à répartition uniforme d'énergie entre ses sorties.

On utilise de la sorte des éléments peu coûteux et usuels.

Selon une seconde forme de réalisation, chacun des coupleurs m x m est un coupleur à répartition de longueur d'onde apte à transmettre de l'énergie d'un signal optique ayant une longueur d'onde, uniquement par la sortie du coupleur m x m reliée au routeur n x n dont le peigne comprend cette longueur d'onde.

Ce second mode de réalisation est avantageux en ce qu'il évite toute perte d'énergie due aux coupleurs m x m, en canalisant les signaux en amont des routeurs n x n en fonction de la longueur d'onde du signal optique.

Dans une forme de réalisation préférée du routeur N x N, les coupleurs m x m sont composés de coupleurs 2 x 2 ayant chacun deux entrées et deux sorties.

De tels coupleurs 2 x 2, dits aussi coupleurs en X, sont des éléments couramment disponibles et aisément utilisables en association.

Dans ce mode de réalisation préféré, le routeur N x N comprend avantageusement un premier niveau de coupleurs 2 x 2 dont les entrées sont les entrées du routeur N x N, et un dernier niveau de coupleurs 2 x 2 dont les sorties sont reliées aux entrées des routeurs n x n. Les entrées des coupleurs 2 x 2 qui n'appartiennent pas au premier niveau, sont reliées à des sorties de coupleurs 2 x 2, et les sorties des coupleurs 2 x 2 qui n'appartiennent pas au dernier niveau, sont reliées à des entrées de coupleurs 2 x 2.

Il est intéressant que le routeur N x N comporte des coupleurs en Y ayant chacun un bras principal et deux bras secondaires, les entrées et les sorties du routeur N x N étant reliées aux bras principaux des coupleurs en Y. Le routeur N x N permet d'envoyer des signaux optiques simultanément de ses entrées vers ses sorties et de ses sorties vers ses entrées, les signaux optiques circulant en sens opposés dans les deux bras secondaires de chacun des coupleurs en Y.

Ce dernier dispositif permet de gagner un facteur 2 dans le nombre d'entrées et de sorties disponibles, car une même longueur d'onde permet des communications dans un sens et dans l'autre du routeur N x N. La caractéristique revendiquée contribue donc à accroître le nombre d'usagers d'un système de transmission, de façon simple.

Préférentiellement, chacun des routeurs n x n comprend :

- un support de transmission comprenant une première rangée des n entrées et une seconde rangée des n sorties, les première et seconde rangées étant disposées parallèlement et le support de transmission ayant une surface de transmission plane,
- un élément diffractant disposé en regard de la surface de transmission,
- une optique de focalisation placée entre le support de transmission et l'élément diffractant,

l'élément diffractant et l'optique de focalisation étant aptes à produire de l'une quelconque des entrées une image correspondant à l'une quelconque des sorties, en fonction de la longueur d'onde des signaux optiques.

Cette configuration des routeurs n x n est à la fois compacte et économique.

L'invention a aussi pour objet un procédé de routage optique mis en oeuvre au moyen d'un routeur N x N selon l'invention. Dans ce procédé, on envoie des signaux optiques ayant chacun une longueur d'onde, des entrées du routeur N x N vers ses sorties.

Le procédé selon l'invention est caractérisé en ce que pour pouvoir envoyer simultanément des signaux optiques d'au moins deux des m entrées d'au moins un des n coupleurs m x m, en direction d'une même des N sorties du routeur N x N sans risque de brouillage, les signaux optiques ont des longueurs d'onde distinctes les unes des autres.

Ainsi, le couplage des signaux d'entrée dans le coupleur m x m concerné n'empêche pas un discernement de ces signaux en sortie du routeur N x N.

Selon un premier mode préféré de mise en oeuvre de ce procédé, la sortie du routeur N x N étant une des n sorties d'un des m routeurs n x n et le peigne du routeur n x n ayant des dents, les longueurs d'onde des signaux optiques sont réparties dans une des dents.

Selon un second mode préféré de mise en oeuvre de ce procédé, les longueurs d'onde des signaux optiques ont des ordres distincts.

L'invention concerne également un réseau de communications comprenant au moins un routeur N x N présentant l'une quelconque des caractéristiques précédentes, ou plusieurs d'entre elles en association, ou mettant en oeuvre l'une quelconque des caractéristiques précédentes du procédé de routage.

L'invention sera mieux comprise en se référant à des applications particulières données à titre d'exemples et représentées par les dessins annexés :

- les Figures 1A et 1B sont des représentations schématiques d'un routeur 4 x 4 de longueur d'onde utilisé dans un routeur N x N selon l'invention, la Figure 1A montrant une vue d'ensemble du routeur 4 x 4 et la Figure 1B, une vue de face de son plan de fibres ;
- la Figure 2 représente un routeur 8 x 8 de longueur d'onde selon l'invention, comportant quatre coupleurs 2 x 2 et deux routeurs 4 x 4 tels que celui schématisés sur les Figures 1A et 1B ;
- la Figure 3 montre les spectres de transmission respectifs des deux routeurs 4 x 4 du routeur 8 x 8 de la Figure 2 ;
- la Figure 4 est une représentation schématique d'un routeur 12 x 12 de longueur d'onde selon l'invention, comportant trois coupleurs 4 x 4 et quatre routeurs 3 x 3, et à double sens de transmission ;
- la Figure 5 est une vue détaillée d'un des coupleurs 4 x 4 du routeur 12 x 12 de la Figure 4 ;
- la Figure 6 montre les spectres de transmission respectifs des quatre routeurs 3 x 3 du routeur 12 x 12 de la Figure 4 ;
- la Figure 7 montre les spectres de transmission respectifs des deux routeurs 4 x 4 du routeur 8 x 8 de la Figure 2, et représente les longueurs d'onde des signaux transmis dans un mode préféré de mise en oeuvre du procédé de routage ;
- la Figure 8 montre dans un mode de mise en oeuvre la matrice de longueur d'onde 20 X 20 d'un routeur 20 x 20.

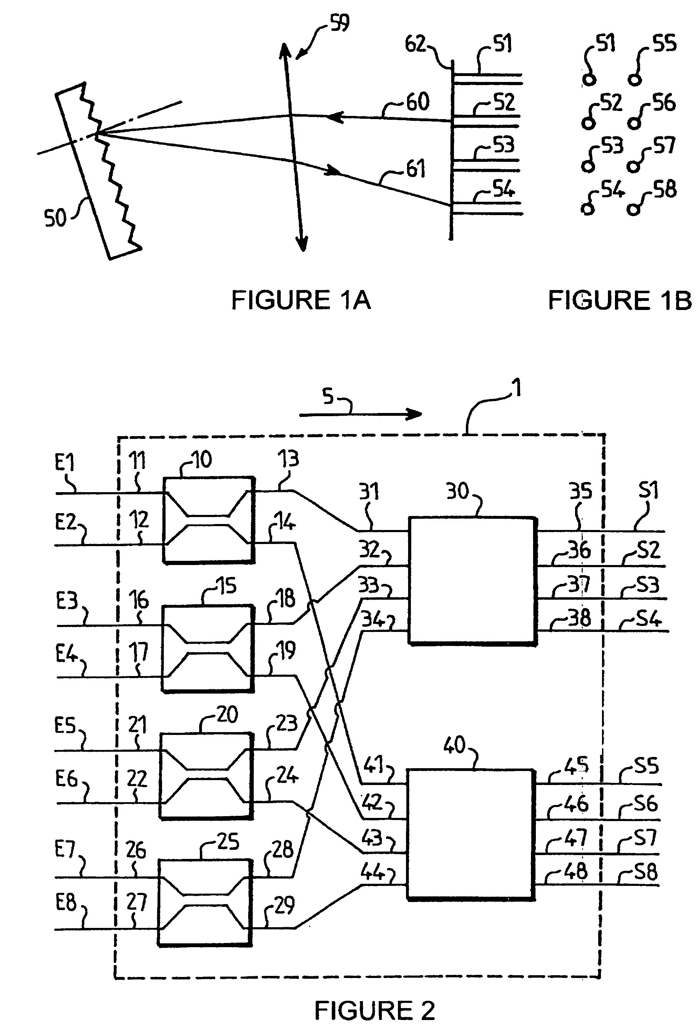

Un routeur 4 x 4 élémentaire, utilisé dans un routeur N x N selon l'invention, comporte un réseau 50 de diffraction disposé vis-à-vis d'un plan 62 de fibres, comme on peut le voir sur la Figure 1A. Le routeur 4 x 4 comporte également une optique de focalisation telle qu'une lentille 59. Des fibres d'entrée 51, 52, 53, 54 aboutissent au plan 62 de fibres en étant disposées en ligne, de même que des fibres de sortie 55, 56, 57, 58, le plan 62 de fibres étant représenté de face sur la Figure 1B. Les fibres d'entrée 51-54 sont disposées parallèlement aux fibres de sortie 55-58 et en vis-à-vis dans le plan 62. Le réseau 50 est apte à produire d'une quelconque des fibres d'entrée 51-54 une image disposée dans un plan focal qui correspond à l'une quelconque des fibres de sortie 55-58 fonction de la longueur d'onde. Un rayon incident 60 contenant des informations transmises par une des fibres d'entrée en provenance d'un usager émetteur est ainsi transformé en un rayon renvoyé 61 au moyen de la lentille 59 et du réseau 50 qui est dirigé vers un usager récepteur par une des fibres de sortie. Selon la longueur d'onde du signal émis, l'un quelconque des quatre usagers émetteurs peut communiquer avec l'un quelconque des quatre usagers récepteurs.

Les relations donnant les longueurs d'onde qui permettent de passer de l'une quelconque des fibres d'entrée à l'une quelconque des fibres de sortie peuvent être schématisées dans une matrice 4 x 4 du type de celle représentée ci-dessous. Les lignes correspondent aux fibres d'entrée 51-54 et les colonnes aux fibres de sortie 55-58. L'ensemble des communications à travers le routeur 4 x 4 nécessitent 7 longueurs d'onde $\lambda_i$, i variant de 1 à 7, classées en ordre croissant.

|   | 1 | 2 | 3 | 4 |
|---|---|---|---|---|
| 1 | $\lambda_7$ | $\lambda_6$ | $\lambda_5$ | $\lambda_4$ |
| 2 | $\lambda_6$ | $\lambda_5$ | $\lambda_4$ | $\lambda_3$ |
| 3 | $\lambda_5$ | $\lambda_4$ | $\lambda_3$ | $\lambda_2$ |
| 4 | $\lambda_4$ | $\lambda_3$ | $\lambda_2$ | $\lambda_1$ |

La réalisation d'un routeur n x n élémentaire, similaire à celui décrit, avec n quelconque, peut être menée comme pour le routeur 4 x 4. Dans ce cas, si les fibres sont identiques et périodiquement espacées, 2n-1 longueurs d'onde de transmission sont nécessaires.

Le réseau 50 de diffraction peut être remplacé ou complété par un ensemble de filtres multi-diélectriques, ou encore par un ensemble de réseaux de phase (phased array grating). Un échelon de Michelson, très efficace pour des longueurs d'onde d'ordres élevés, peut aussi être employé.

De plus, au lieu des fibres, une ou plusieurs barrettes de lasers peuvent être employées comme moyens d'aiguillage en entrée, et une ou plusieurs barrettes de photodétecteurs comme moyens de réception en sortie.

Une unique barrette de fibres d'entrée et de sortie peut aussi être employée.

Dans un mode de réalisation particulier d'un routeur n x n, celui-ci comprend un miroir et un réseau de diffraction, le miroir, le réseau et les fibres étant fixés dans un bloc de silice solide. Une barrette de fibres d'entrée et une barrette de fibres de sortie parallèles sont placées en face d'une fente photogravée sur un réseau de réflexion plan, perpendiculaire à des rainures. Un miroir concave est apte à transformer un faisceau divergent provenant de l'une quelconque des fibres d'entrée en un faisceau parallèle. Le réseau est quant à lui apte à transformer ce faisceau en le dispersant angulairement vers le miroir concave. Ce faisceau a alors une image formée à une extrémité d'une des fibres de sortie en une position qui dépend de la longueur d'onde. Cette configuration est aplanétique, afocale et a une amplification de 1. Ainsi, tous angles de et vers les fibres étant identiques, les meilleures conditions sont obtenues avec une grande efficacité de couplage, l'achromatisme est parfait et les aberrations sont pratiquement nulles quand le miroir est parabolique.

Pour le calcul de spécifications, le réseau est avantageusement dans une configuration de Littrow. De plus, on utilise préférentiellement une configuration de type OP (Out of Plane) pour éviter un retour direct vers un amplificateur optique situé à courte distance. Dans cette configuration, le composant utilise une barrette de fibres d'entrée au foyer du dispositif dispersif de réseau, de telle sorte qu'aucune lumière ne peut être couplée directement aux fibres de sortie à une longueur d'onde correspondant à une condition de Littrow. La barrette des fibres de sortie est disposée pour ceci au-dessus de celle des fibres d'entrée.

Un routeur 8 x 8 référencé 1 conforme à l'invention, représenté sur la Figure 2, comporte huit entrées E1-E8 et huit sorties S1-S8. Ce routeur 8 x 8 est destiné à transmettre des signaux optiques d'une entrée quelconque $E_i$ vers une sortie quelconque $S_i$, dans le sens 5, le trajet du signal optique étant déterminé par sa longueur d'onde. Le routeur 1 comporte deux routeurs 4 x 4 référencés respectivement 30 et 40 qui sont des routeurs 4 x 4 tels que celui précédemment décrit (Figures 1A et 1B). Eventuellement, il peut aussi s'agir de routeurs 4 x 4 traditionnels. Les routeurs 30 et 40 comprennent chacun respectivement quatre entrées 31-34 et 41-44, et quatre sorties 35-38 et 45-48. Les sorties 35-38, 45-48 des routeurs 30 et 40 conduisent directement aux sorties S1-S8 du routeur 1.

Le routeur 1 comporte également quatre coupleurs achromatiques en X référencés 10, 15, 20, 25 ayant chacun respectivement deux entrées 11, 12 ; 16, 17 ; 21, 22 et 26, 27, et deux sorties 13, 14 ; 18, 19 ; 23, 24 et 28, 29. Les entrées 11, 12 ; 16, 17 ; 21, 22 ; 26, 27 des coupleurs 10, 15, 20, 25 en X correspondent respectivement aux entrées E1-E8 du routeur 1. Chacun des coupleurs 10, 15, 20, 25 a de plus l'une de ses sorties, respectivement 13, 18, 23, 28, reliées à l'une des entrées, respectivement 31, 32, 33, 34, d'un premier routeur 30, et son autre sortie, respectivement 14, 19, 24, 29, reliée à l'une des entrées, respectivement 41, 42, 43, 44, du second routeur 40.

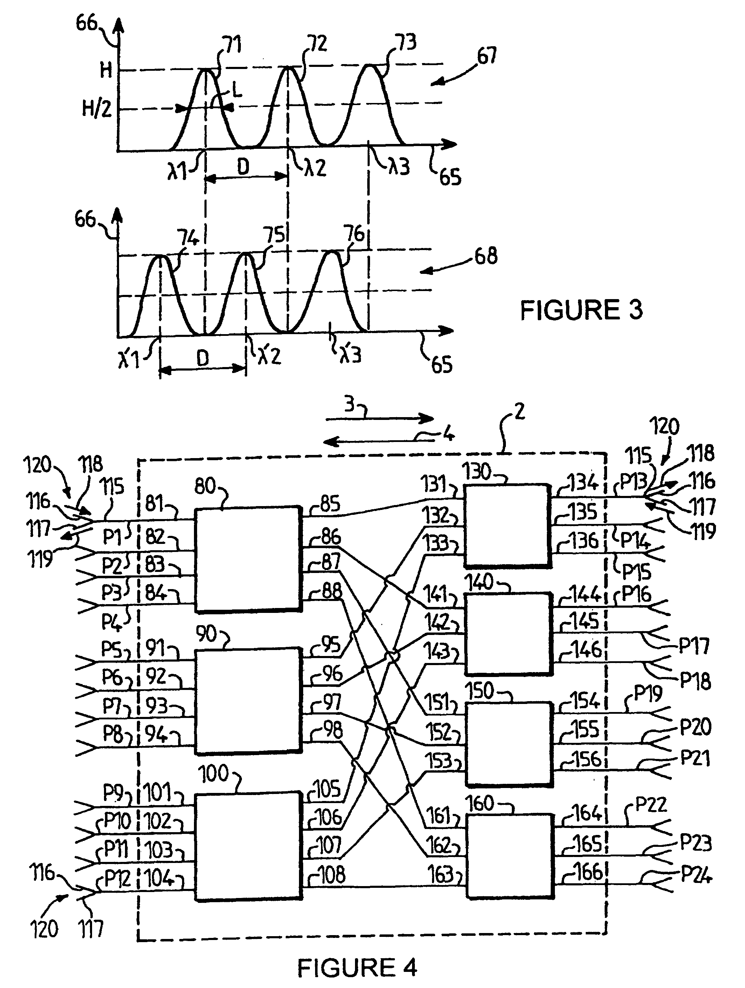

Les spectres 67 et 68 de transmission respectifs des routeurs 30 et 40, représentés sur la Figure 3, se présentent sous forme de peignes avec des dents, respectivement 71-73 et 74-76. Les spectres 67 et 68 étant tracés selon des axes 65 et 66, respectivement de longueurs d'onde λ et de transmission T, ont leurs dents 71-76 centrées sur des longueurs d'onde de transmission des routeurs 30 et 40. En reprenant la matrice de correspondance précédemment donnée, les dents 71, 72 et 73 du spectre 67 sont, par exemple, respectivement centrées sur les longueurs d'onde $\lambda_1$, $\lambda_2$, $\lambda_3$, les longueurs d'onde $\lambda_i$ étant classées en ordre croissant. De façon similaire, les dents 74, 75 et 76 du spectre 68 sont centrées sur les longueurs d'onde $\lambda'_1$, $\lambda'_2$, $\lambda'_3$.

Dans l'exemple de réalisation, les dents 71-76 ont des hauteurs approximativement identiques et égales à H. Des particularités des spectres 67 et 68 sont constituées par les largeurs L des dents 71-76 à mi-hauteur $\frac{H}{2}$ et par les espacements D entre les longueurs d'onde $\lambda_i$ de transmission successives. En première approximation, les largeurs L à mi-hauteur sont voisines pour l'ensemble des dents, ainsi que les espacements D. Le rapport $R = \frac{L}{D}$ est significatif des capacités des routeurs 30 et 40. Plus ce rapport est grand, plus les capacités de traitement des routeurs 30 et 40 sont élevées.

Les routeurs 30 et 40 sont choisis de telle sorte que leurs longueurs d'onde de transmission $\lambda_i$ et $\lambda'_i$ soient intercalées. On a donc:

$$\lambda'_1 < \lambda_1 < \lambda'_2 < \lambda_2 < \lambda'_3 < \lambda_3$$

En fonctionnement, un signal à une longueur d'onde donnée parvient à l'une quelconque des entrées $E_i$ du routeur 1, puis à l'un des coupleurs 10, 15, 20, 25. Le signal est alors transmis aux deux sorties de ce coupleur avec dans chacune une énergie divisée par deux, les coupleurs étant achromatiques. Le signal optique parvient ainsi à une entrée de chacun des routeurs 30, 40. Etant donné que la longueur d'onde du signal correspond à une longueur d'onde de transmission de l'un seulement des spectres 67, 68 des routeurs 30, 40, le signal n'est transmis que dans ce routeur, vers la sortie appropriée sélectionnée en fonction de la longueur d'onde. La sortie $S_j$ visée est ainsi atteinte par le signal.

Le routeur 1 dispose donc d'un spectre global de transmission qui admet conjointement les dents 71-76 des deux spectres 67 et 68 des routeurs 30 et 40. A largeur à mi-hauteur constante, égale à L, l'espacement D inter-longueurs d'onde de transmission est ainsi sensiblement réduit, cette réduction pouvant aller jusqu'à un facteur 2. Pour une bande spectrale disponible donnée, le nombre de longueurs d'onde de transmission peut donc être multiplié par 2, et par conséquent également le nombre d'usagers. Le rapport R peut lui-même être multiplié par 2, ce qui rend plus aisée la sélection d'une longueur d'onde de transmission.

Un second exemple de réalisation d'un routeur N x N selon l'invention est fourni par un routeur 12 x 12 de longueur d'onde référencé 2, représenté sur la Figure 4. Ce routeur comporte douze entrées P1-P12 et douze sorties P13-P24. Il comprend également quatre routeurs 3 x 3 de longueur d'onde référencés 130, 140, 150, 160, ayant chacun respectivement trois entrées 131-133, 141-143, 151-153, 161-163 et trois sorties 134-136, 144-146, 154-156 et 164-166. Les sorties des routeurs 130, 140, 150, 160 correspondent respectivement aux sorties P13-P24 du routeur 2.

Le routeur 2 comporte également trois coupleurs achromatiques 4 x 4, référencés 80, 90 et 100. Ces coupleurs comportent chacun quatre entrées, respectivement 81-84, 91-94 et 101-104 et quatre sorties, respectivement 85-88, 95-98 et 105-108. Les entrées des coupleurs 80, 95, 100 correspondent respectivement aux entrées P1-P12 du routeur 2, et les quatre sorties de chacun des coupleurs 80, 90, 100 sont reliées chacune à une entrée d'un des routeurs 130, 140, 150, 160.

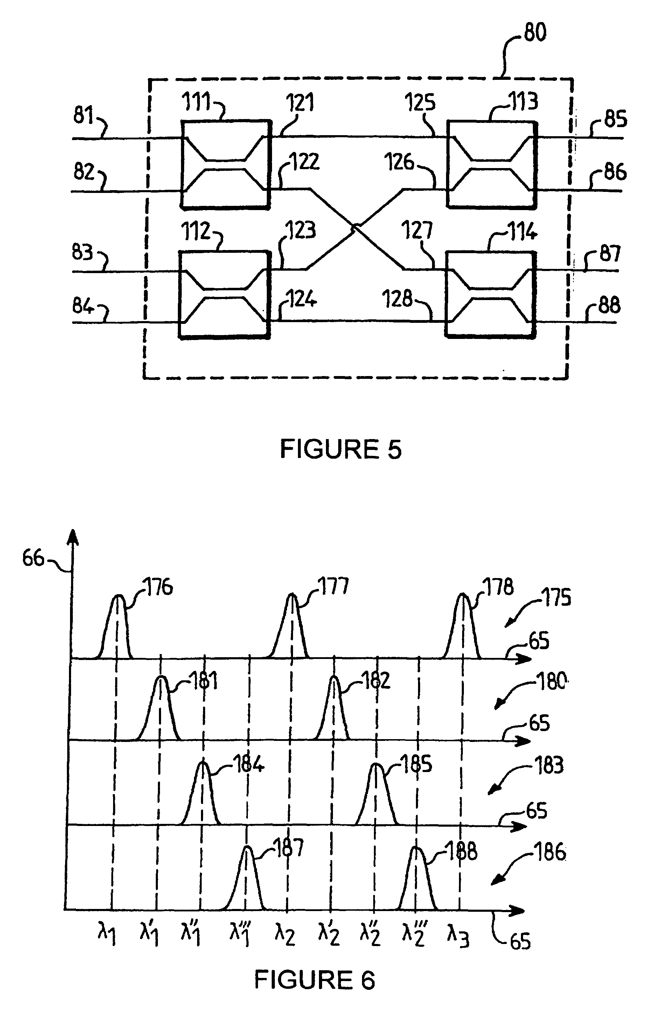

Chacun des coupleurs 80, 90, 100 est en réalité constitué à partir de quatre coupleurs en X. Ainsi, comme on peut le voir sur la Figure 5, le coupleur 80 comporte quatre coupleurs 2 x 2 référencés 111-114 comprenant chacun deux entrées, respectivement 81, 82 ; 83, 84 ; 125, 126 ; 127, 128 et deux sorties, respectivement 121, 122 ; 123, 124 ; 85, 86 ; 87, 88. Deux des coupleurs en X, 111, 112, sont disposés à un premier niveau, leurs entrées 81-84 étant celles du coupleur 80. Les deux autres coupleurs en X, 113 et 114, sont disposés à un second niveau, leurs sorties 85-88 étant celles du coupleur 80. De plus, les sorties 121-124 de chacun des deux coupleurs 111, 112 du premier niveau sont chacune reliées à une entrée 125-128 d'un des coupleurs 113, 114 du second niveau. Les deux autres coupleurs 4 x 4, 90 et 100, sont réalisés de façon similaire.

Le routeur 2 comprend de plus 24 coupleurs achromatiques en Y référencés 120, chacun d'eux comprenant un bras principal 115 et deux bras secondaires 116 et 117. Chacune des entrées P1-P12 et des sorties P13-P24 du routeur 2 est reliée au bras principal 115 de l'un des coupleurs en Y 120. Les coupleurs 120 sont destinés à servir de moyens de transmission, à double sens de propagation, les deux branches 116, 117 de chacun des coupleurs 120 étant prévues pour des sens 118, 119 opposés de propagation de signaux. Le routeur 2 est ainsi destiné à des transmissions de signaux, à la fois dans un sens 3 des entrées P1-P12 vers les sorties P13-P24, et dans un sens 4 opposé.

Les routeurs 130, 140, 150, 160 ont des spectres 175, 180, 183, 186 de transmission présentant des formes de peignes comportant des dents, respectivement 176-178 ; 181, 182 ; 184, 185 ; 187, 188, centrées sur des longueurs d'onde $\lambda_1$, $\lambda_2$, $\lambda_3$ ; $\lambda'_1$, $\lambda'_2$ ; $\lambda''_1$, $\lambda''_2$ ; $\lambda'''_1$, $\lambda'''_2$.

Les dents des quatre spectres 175, 180, 183, 186 des routeurs 130, 140, 150, 160 sont alternées, c'est-à-dire que l'on a :

$$\lambda_1 < \lambda'_1 < \lambda''_1 < \lambda'''_1 < \lambda_2 < \lambda'_2 < \lambda''_2 < \lambda'''_2 < \lambda_3$$

En fonctionnement, un signal à une longueur d'onde donnée parvient à l'une des entrées d'un des coupleurs 80, 90 ou 100 et est transmis aux quatre sorties de ce coupleur 4 x 4 avec une réduction d'énergie par un facteur 4. Le signal optique est ainsi transmis à une entrée de chacun des quatre routeurs 130, 140, 150, 160. Etant donné que la longueur d'onde du signal n'est qu'une longueur d'onde de transmission d'un seulement des spectres 175, 180, 183, 186 des routeurs 3 x 3, la transmission du signal n'a lieu que dans ce routeur, vers la sortie sélectionnée en fonction de la longueur d'onde du signal.

Le routeur 2 présente donc un spectre général de transmission ayant l'ensemble des dents 176-178, 181, 182, 184, 185, 187, 188 des spectres 175, 180, 183, 186 des quatre routeurs 130, 140, 150, 160. La largeur à mi-hauteur des dents est ainsi conservée, et l'espacement inter-longueurs d'onde de transmission sensiblement réduit, cette réduction pouvant atteindre un facteur 4. Qui plus est, des signaux peuvent parvenir simultanément des sorties P13-P24 vers les entrées P1-P12, selon le même principe. Une même longueur d'onde peut ainsi être utilisée dans les deux sens de communication entre deux usagers, ce qui multiplie par deux les capacités du routeur 2.

Les pertes d'énergie des routeurs 1 et 2 sont faibles, correspondant respectivement à des facteurs de l'ordre de 2 et de 4. La présence d'amplificateurs optiques dans les dispositifs de commutation permet de compenser les effets de ces pertes. Il est cependant possible de rendre les pertes dues aux coupleurs négligeables, en association les coupleurs à des moyens de sélection de longueurs d'onde. Ces moyens peuvent être obtenus, par exemple, par un interféromètre à deux ondes, tel qu'un interféromètre de Michelson qui peut être disposé dans une plaquette optique intégrée. Dans ce cas, le signal optique sortant d'un des coupleurs n'est transmis sélectivement que vers le routeur ayant une longueur d'onde de transmission correspondant à la longueur d'onde du signal.

Bien que les dents des peignes de routeurs n x n distincts aient été représentées dissociées, elles peuvent également de chevaucher, l'important étant le centrage de chacune des dents sur une longueur d'onde de transmission donnée. Dans les exemples représentés, on a montré des spectres dont les dents des différents routeurs sont intercalées; Cependant, tout autre moyen d'obtenir un recouvrement complémentaire du spectre peut convenir. En particulier, l'alternance de composantes spectrales d'un routeur à l'autre peut concerner des bandes et non plus des dents, chaque bande comprenant plusieurs dents. Cette configuration est avantageuse en particulier si l'espacement inter-longueurs d'onde de transmission est irrégulier, les dents étant regroupées par paquets.

On conçoit que les routeurs 4 x 4 et 3 x 3 élémentaires respectivement employés dans les routeurs 1 et 2 peuvent être eux-mêmes des routeurs selon l'invention.

Cette possibilité s'avère surtout intéressante en présence d'un nombre n plus élevé d'entrées et de sorties, l'invention pouvant être appliquée en cascade sur deux niveaux ou davantage.

Une version améliorée du procédé de routage mis en oeuvre avec le routeur N x N de l'invention peut être réalisée.

Considérant, par exemple, le routeur 1 précédemment décrit (Figure 2), il est souhaitable que plusieurs quelconques des entrées E1-E8 puissent communiquer simultanément avec une même des sorties S1-S8. Dans la version de base précédemment exposée, la transmission de signaux provenant de deux entrées associées à un même coupleur 2 x 2, par exemple les entrées E1 et E2 et le coupleur 10, et dirigés vers une même sortie, par exemple S1, provoque un brouillage entre les deux signaux.

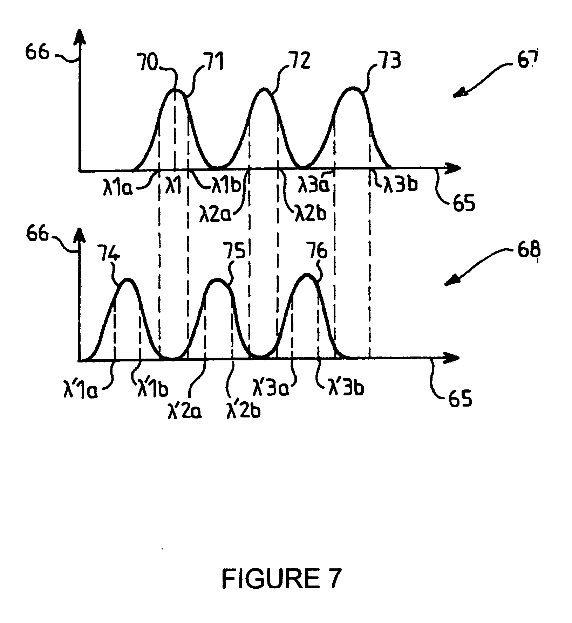

Pour y remédier, un premier mode de mise en oeuvre consiste à envoyer, respectivement en E1 et E2, des signaux ayant des longueurs d'onde distinctes, mais disposés sur une même dent du spectre 67 de transmission du routeur 30, comme représenté sur la Figure 7. Ainsi, si la dent 71 du spectre 67 correspond à un chemin optique de l'entrée 31 du routeur 30 vers la sortie S1, la longueur d'onde pour E1 vaut $\lambda_{1a}$ et celle pour E2, $\lambda_{1b}$. Les longueurs d'onde $\lambda_{1a}$, $\lambda_{1b}$ sont disposées de façon à produire sur la dent 71 des amplitudes de transmission de préférence élevées, c'est-à-dire proches de la valeur maximale 70 atteinte approximativement pour la longueur d'onde $\lambda_1$ moyenne, sur laquelle est centrée la dent 71. Les longueurs $\lambda_{1a}$ et $\lambda_{1b}$ sont donc préférentiellement proches de $\lambda_1$. Qui plus est, elles sont avantageusement symétriques par rapport à $\lambda_1$, de façon à ce que les amplitudes de transmission correspondantes soient égales ou voisines.

Grâce à cette dissociation des longueurs d'onde des signaux envoyés en E1 et E2, les signaux reçus simultanément en S1 à partir de E1 et E2 peuvent être reconstitués par séparation des longueurs d'onde $\lambda_{1a}$ et $\lambda_{1b}$. Cette séparation peut, par exemple, être menée au moyen d'un filtre de détection cohérente.

Il est clair que le même mode de mise en oeuvre est applicable à l'ensemble des entrées E1-E8 du routeur 1, par dissociation systématique des deux longueurs d'onde correspondant respectivement aux deux entrées de chacun des coupleurs 2 x 2, 10, 15, 20, 25, et à une des dents 71-76 d'un des spectres 67, 68, selon la sortie S1-S8 visée.

Selon un mode de mise en oeuvre du procédé de routage, pour envoyer simultanément des signaux des E1 et E2 vers S1, on choisit respectivement deux longueurs d'onde d'ordres distincts, permettant toutes deux aux signaux d'être dirigés de l'entrée 31 du routeur 30 vers sa sortie 35.

En pratique, des ordres élevés sont nécessaires, ce qui rend avantageuse la présence d'un échelon de Michelson dans le routeur 30.

Ce mode de mise en oeuvre est, comme le premier, applicable à l'ensemble des entrées E1-E8, les deux modes pouvant être éventuellement combinés. Par exemple, l'un ou l'autre peut être employé selon les dents du spectre.

Le procédé de routage décrit, consistant à envoyer vers les entrées d'un même coupleur des signaux avec des longueurs d'onde distinctes, pour les transmettre simultanément vers une même sortie du routeur N X N, est valable également pour m supérieur à 2.

Par exemple, dans le routeur 2 décrit précédemment (Figure 4), on peut envoyer simultanément des signaux des quatre entrées P1-P4 associées au coupleur 80 vers la même sortie P13 du routeur 2. Pour ce faire, les quatre signaux correspondant respectivement aux quatre entrées P1-P4 ont des longueurs d'onde distinctes.

Dans le premier mode de mise en oeuvre, les quatre longueurs d'onde sont réparties dans la dent du spectre 175 associée à la transmission d'un signal de l'entrée 131 du routeur 130 vers sa sortie 134, cette dent étant, par exemple, celle référencée 176. Les quatre longueurs d'onde sont avantageusement disposées à proximité de $\lambda_1$, et symétriquement par rapport à elle.

Dans le second mode de mise en oeuvre, elles ont des ordres distincts.

Bien sûr, il est possible qu'une partie seulement des quatre entrées P1-P4 reçoivent des signaux simultanément, en direction de la sortie P13.

Les sources lumineuses reliées aux entrées P1-P12 du routeur 2 et les moyens de détection reliés aux sorties P13-P24 sont cependant de préférence prévus pour respectivement émettre et détecter automatiquement des signaux aux longueurs d'onde distinctes définies dans le procédé de routage choisi, ce qui permet une reconnaissance des signaux dans tous les cas de figure.

Le routeur de l'invention peut être réalisé dans une technologie à base de fibres optiques ou encore en optique intégrée.

Le routeur N x N de l'invention peut faire l'objet d'une mise en oeuvre partielle, seule une partie de ses N entrées étant utilisées pour recevoir des signaux optiques. Le nombre des N entrées effectivement en service étant égal à M, avec M < N, le routeur N x N se comporte alors comme un routeur M x N.

Exemple 1

Dans ce premier exemple d'application, le routeur selon l'invention est un routeur 40 x 40 comprenant deux routeurs 20 x 20 et 20 coupleurs achromatiques en X. Chacun des routeurs 20 x 20 correspond à un composant en silice, avec une focale de 119,512 mm, un réseau de 600 traits/mm, avec un porte-fibre à double barrette de fibres espacées de 42,54 μm. Le premier routeur est en autocollimation au centre du champ pour 1548,5145 nm, et le second routeur a un spectre décalé d'une demi-période grâce à une autocollimation à 1548,5145 ± 0,4 nm. Une double barrette de 20 fibres également espacées est disposée au foyer.

Les longueurs d'onde de transmission du premier routeur 20 x 20 vont de 1533,2 nm à 1563,9 nm avec un espacement inter-longueurs d'onde de transmission de 0,8 nm.

Les spectres des routeurs 20 x 20 sont tels que la largeur à mi-hauteur des dents, qui ont approximativement une forme gaussienne, vaut 0,25 nm ± 0,02 nm. De plus, les routeurs 20 x 20 ont les propriétés suivantes :

- pertes de 4 dB ± 1 dB;
- diaphotie intrinsèque < - 55 dB d'une voie à une autre ;
- perte retour < - 25 dB ;
- sensibilité de polarisation < 1 dB ;
- élargissement d'impulsion dû au réseau égal à 38,6 ps ;
- précision de voie de longueur d'onde : ± 0,05 nm.

L'espacement entre longueurs d'onde de transmission (valant 0,8 nm) est choisi constant, ce qui évite des pertes additionnelles pouvant atteindre 3 dB.

Les routeurs 20 x 20 sont compatibles avec des débits de 10 Gbit/seconde sur chaque voie.

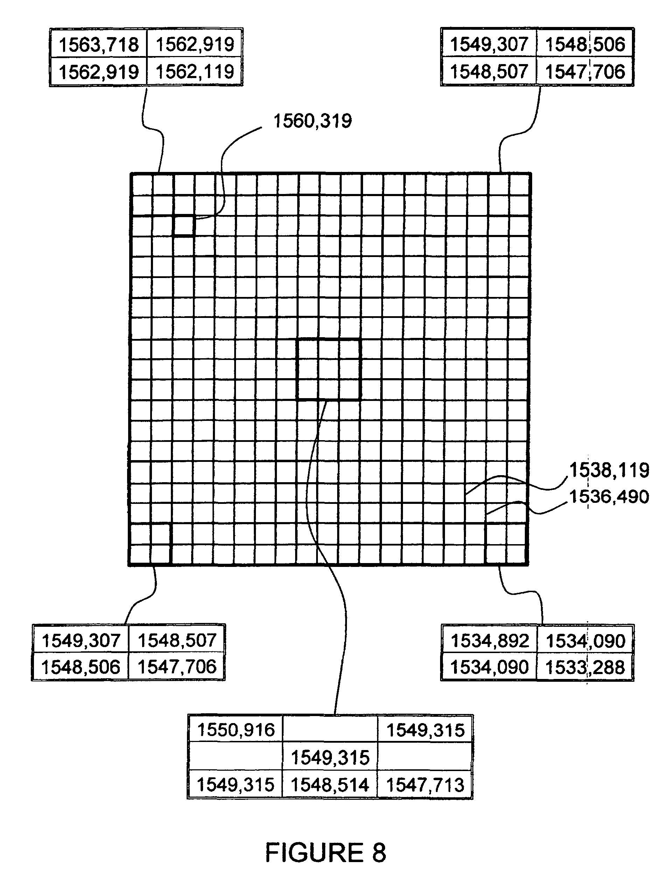

La matrice de longueur d'onde 20 x 20 du premier routeur 20 X 20 a été calculée en prenant en compte l'indice exact de silice de chaque longueur d'onde, par ajustement itératif à des valeurs de référence. La matrice obtenue est représentée sur la Figure 8 ; les 20 colonnes correspondant aux entrées, et les 20 lignes aux sorties. Les valeurs indiquées sont exprimées en nm. Le défaut d'ajustement reste inférieur à 0,008 nm, ce qui est négligeable.

Exemple 2

Un routeur 80 x 80 comprend deux routeurs 40 x 40 et 40 coupleurs achromatiques en X.

Les routeurs 40 x 40 vérifient les spécifications qui suivent :

- espacement inter-longueurs d'onde de transmission : 0,4 nm
- largeur à mi-hauteur des dents : 0,25 nm ± 0,03 nm

- pertes < 7 dB ± 2 dB ;
- diaphotie d'une voie à une autre < - 60 dB.

Ces routeurs 40 x 40 sont compatibles avec des débits de Gbit/seconde sur chaque voie.

Exemple 3

Un routeur 6 x 6 comporte deux routeurs 3 x 3 réalisés à l'aide de 6 multiplexeurs faits chacun en technologie à fonction optique partagée avec focale 119,512 mm, espace entre fibres 32 µm et réseau de 300 traits/mm.

Les multiplexeurs du premier routeur 3 x 3 sont associés aux longueurs d'onde 1552,517 nm, 1550,916 nm et 1549,315 nm. Ceux du second routeur 3 x 3, aux mêmes longueurs d'onde décalées de ±0,8 nm.

Le routeur 6 x 6 comporte également 3 coupleurs en X réalisés en technique de fibres fusionnées à coeurs rapprochés (fused coupler).

**Revendications**

1. Routeur (1,1) N x N de longueur d'onde comportant N entrées (E1-E8, P1-P12) et N sorties (S1-S8, P13-P24), destiné à transmettre des signaux optiques ayant chacun une longueur d'onde, des entrées vers les sorties, le routeur N x N (1,2) comportant également des moyens d'aiguillage aptes à aiguiller chacun des signaux optiques de l'une quelconque des N entrées vers l'une quelconque des N sorties en fonction de la longueur d'onde dudit signal,

    les moyens d'aiguillage comportant:

    - n coupleurs m x m (10, 15, 20, 25, 80, 90, 100) ayant chacun m entrées (11, 12, 16, 17, 21, 22, 26, 27, 81-84, 91-94, 101-104) et m sorties (13, 14, 18, 19, 23, 24, 28, 29, 85-88, 95-98, 105-108), N étant égal à n x m et les N entrées des n coupleurs m x m (10, 15, 20, 25, 80, 90, 100) étant les entrées (E1-E8, P1-P12) du routeur N x N (1,2).
    - m routeurs n x n (30, 40, 130, 140, 150, 160) ayant chacun n entrées(31-34, 41-44, 131-133, 141-143, 151-153, 161-163) et n sorties (35-38, 45-48, 134-136, 144-146, 154-156, 164-166), chacune desdites n entrées étant reliée à une des sorties de, respectivement, les n coupleurs m x m (10, 15, 20, 25, 80, 90, 100) et les N sorties des m routeurs n x n (30, 40, 130, 140, 150, 160) étant les sorties (S1-S8, P13-P24) du routeur N x N, chacun des routeurs n x n étant apte à aiguiller un signal optique ayant une longueur d'onde, de l'une quelconque de ses n entrées vers l'une quelconque de ses n sorties, en fonction de sa longueur d'onde dudit signal, ledit routeur n x n (30, 40, 130, 140, 150, 160) ayant un spectre de transmission (67, 68, 175, 180, 183, 186) en fonction de la longueur d'onde sous forme d'un peigne,

    **caractérisé en ce que** les peignes des m routeurs n x n sont différents les uns des autres, de manière à rendre possible une sélection en fonction de la longueur d'onde pour une quelconque desdites N entrées (E1-E8, P1-P12) du routeur (1, 2) N x N, à la fois d'un des m routeurs n x n et d'une des n sorties dudit routeur n x n.

2. Routeur N x N selon la revendication 1, **caractérisé en ce que** le spectre de transmission (67, 68, 175, 180, 183, 186) de chacun des m routeurs n x n (30, 40, 130, 140, 150, 160) comprenant des bandes de longueurs d'onde et chacune desdites bandes comprenant des dents (71-76, 176-178, 181, 182, 184, 185, 187, 188), les spectres de transmission des m routeurs n x n ont leurs bandes intercalées.

3. Routeur N x N selon la revendication 2, **caractérisé en ce que** les peignes (67, 68, 175, 180, 183, 186) des m routeurs n x n (30, 40, 130, 140, 150, 160) ont leurs dents (71-76, 176-178, 181, 182, 184, 185, 187, 188) intercalées.

4. Routeur N x N selon l'une quelconque des revendications précédentes, **caractérisé en ce que** le peigne (67, 68, 175, 180, 183, 186) de chacun des m routeurs n x n (30, 40, 130, 140, 150, 160) a des dents(71-76, 176-178, 181, 182, 184, 185, 187, 188) complètement dissociées des dents des autres peignes.

5. Routeur N x N selon l'une quelconque des revendications précédentes, **caractérisé en ce que** chacun des coupleurs m x m (10, 15, 20, 25, 80, 90, 100) est un coupleur achromatique à répartition uniforme d'énergie entre ses sorties (13, 14, 18, 19, 23, 24, 28, 29, 85-88, 95-98, 105-108).

6. Routeur N x N selon l'une quelconque des revendications 1 à 4, **caractérisé en ce que** chacun des coupleurs m x m (10, 15, 20, 25, 80, 90, 100) est un coupleur à répartition de longueur d'onde apte à transmettre de l'énergie d'un signal optique ayant une longueur d'onde, uniquement par la sortie dudit coupleur m x m reliée au routeur n x n (30, 40, 130, 140, 150, 160) dont le peigne (67, 68, 175, 180, 183, 186) comprend ladite longueur d'onde.

7. Routeur N x N selon l'une quelconque des revendications précédentes, **caractérisé en ce que** les coupleurs m x m (10, 15, 20, 80, 90, 100) sont composés de coupleurs 2 x 2 (10, 15, 20, 111-114) ayant chacun deux entrées (11, 12, 16, 17, 21, 22, 26, 27, 81-84, 125-128) et deux sorties (13, 14, 18, 19, 23, 24, 28, 29, 85-88, 121-124).

**8.** Routeur N x N selon la revendication 7, **caractérisé en ce qu'**il comprend un premier niveau de coupleurs 2 x 2 (111, 112) dont les entrées (81-84) sont les entrées (P1-P4) du routeur N x N (2), et un dernier niveau de coupleurs 2 x 2 (113, 114) dont les sorties (85-88) sont reliées aux entrées (131, 141, 151, 161) des routeurs n x n (130, 140, 150, 160), les entrées (125-128) des coupleurs 2 x 2 (113, 114) qui n'appartiennent pas audit premier niveau étant reliées à des sorties (121-124) de coupleurs 2 x 2 (111, 112), et les sorties (121-124) des coupleurs 2 x 2 (111, 112) qui n'appartiennent pas audit dernier niveau étant reliées à des entrées (125-128) de coupleurs 2 x 2 (113, 114).

**9.** Routeur N x N selon l'une quelconque des revendications précédentes, **caractérisé en ce qu'**il comporte des coupleurs en Y (120) ayant chacun un bras principal (115) et deux bras secondaires (116, 117), les entrées (P1-P12) et les sorties (P13-P24) du routeur N x N (2) étant reliées aux bras principaux (115) desdits coupleurs en Y (120), ledit routeur N x N (2) permettant d'envoyer des signaux optiques simultanément de ses entrées vers ses sortis et de ses sorties vers ses entrées, lesdits signaux optiques circulant en sens opposées (3, 4) dans les d'eux bras secondaires (116, 117) de chacun des coupleurs en Y.

**10.** Routeur N x N selon l'une quelconque des revendications précédentes, **caractérisé en ce que** chacun des routeurs n x n comprend:

- un support de transmission comprenant une première rangée des n entrées et une seconde rangée des n sorties, les première et seconde rangées étant disposées parallèlement et le support de transmission ayant une surface de transmission plane,
- un élément diffractant en regard de ladite surface de transmission,
- une optique de focalisation placée entre le support de transmission et l'élément diffractant,

l'élément diffractant et l'optique de focalisation étant aptes à produire de l'une quelconque des entrées, une image correspondant à l'une quelconque des sorties en fonction de la longueur d'onde desdits signaux optiques.

**11.** Procédé de routage optique mis en oeuvre au moyen d'un routeur N x N (1, 2) conforme à l'une quelconque des revendications précédentes, dans lequel on envoie des signaux optiques ayant chacun une longueur d'onde, des entrées (E1-E8, P1-P12) du routeur N x N vers ses sorties (S1-S8, P13-P24), **caractérisé en ce que** pour pouvoir envoyer simultanément des signaux optiques d'au moins deux des m entrées (11, 12, 16, 17, 21, 22, 26, 27, 81-84, 91-94, 101-104) d'au moins un des n coupleurs m x m (10, 15, 20, 25, 80, 90, 100) en direction d'une même des N sorties (S1-S8, P13-P24) du routeur N x N (1, 2) sans risque de brouillage, lesdits signaux optiques ont des longueurs d'onde distinctes les unes des autres.

**12.** Procédé de routage optique selon la revendication 11, **caractérisé en ce que** ladite sortie (S1-S8) du routeur N x N (1) étant une des n sorties (35-38, 45-48) d'un des m routeurs n x n (30, 40) et le peigne (67, 68) dudit routeur n x n (30, 40) ayant des dents (71-76), les longueurs d'onde desdits signaux optiques sont réparties dans une desdites dents (71-76).

**13.** Procédé de routage optique selon la revendication 11, **caractérisé en ce que** les longueurs d'onde desdits signaux optiques ont des ordres distincts.

**14.** Réseau de communications comprenant au moins un routeur N x N (1, 2) selon l'une quelconque des revendications 1 à 10.

**15.** Réseau de communications comprenant au moins un routeur N x N (1,2) mettant en oeuvre un procédé de routage selon l'une quelconque des revendications 11 à 13.

**Patentansprüche**

**1.** N x N Wellenlängenrouter (1, 1), umfassend N Eingänge (E1-E8, P1-P12) und N Ausgänge (81-88, P13-P24), um optische Signale jeweils einer Wellenlänge von Eingängen zu Ausgängen zu übertragen, wobei der N x N Router (1, 2) außerdem Weichenmittel umfaßt, die geeignet sind, jedes der optischen Signale von irgendeinem der N Eingänge zu irgendeinem der N Ausgänge in Abhängigkeit von der Wellenlänge des Signals zu leiten, wobei die Weichenmittel umfassen:

- n m x m Koppler (10, 15, 20, 25, 80, 90, 100), die je m Eingänge (11, 12, 16, 17, 21, 22, 26, 27, 81-84, 91-94, 101-104) und m Ausgänge (13, 14, 18, 19, 23, 24, 28, 29, 85-88, 105-108) aufweisen, wobei N gleich n x m ist und die N Eingänge der n m x m Koppler (10, 20, 25, 80, 90, 100) die Eingänge (E1-E8, P1-P12) des N x N Routers (1, 2) sind,
- m n x n Router (30, 40, 130, 140, 150, 160), die je n Eingänge (31-34, 41-44, 131-133, 141-143, 151-153, 161-163) und n Ausgänge (35-38, 45-48, 134-136, 144-146, 154-156, 164-166), aufweisen, wobei jeder der n Eingänge mit einem der Ausgänge von jeweils den n m x m Kopplern (10, 15, 20, 25, 80, 90, 100) und den N Ausgängen der m n x n Router (30, 40, 130, 140, 150, 160), die die Ausgänge (S1-S8, P13-P24) des N x N Routers sind, verbunden sind, wobei jeder der n x n Router geeignet ist, ein optisches Signal einer Wellenlänge wahlweise von irgendeinem seiner n Eingänge zu irgendeinem seiner n Ausgänge abhängig von der Wellenlänge des Signals zu leiten, wobei der n x n Router (30, 40, 130, 140, 150, 160) ein kammförmiges Durchlässigkeitsspektrum (67, 68, 175, 180, 183, 186) abhängig von der Wellenlänge aufweist,

**dadurch gekennzeichnet,**
**daß** die Kämme der m n x n Router in der Weise untereinander unterschiedlich sind, daß eine wellenlängenabhängige Auswahl für einen beliebigen der N Eingänge (E1-E8, P1-P12) des N x N Routers (1, 2), gleichzeitig von einem der m n x n Router und einem der n Ausgänge des n x n Routers ermöglicht ist.

2. N x N Router nach Anspruch 1,
   **dadurch gekennzeichnet,**
   **daß** das Durchlässigkeitsspektrum (67, 68, 175, 180, 183, 186) jedes der m n x n Router (30, 40, 130, 140, 150, 160) Wellenlängenbänder umfaßt und daß jedes der Bänder Zacken (71-76, 176-178, 181, 182, 184, 185, 187, 188) aufweist, wobei die Durchlässigkeitsspektren der m n x n Router ineinander geschachtelte Bänder haben.

3. N x N Router nach Anspruch 2,
   **dadurch gekennzeichnet,**
   **daß** die Kämme (67, 68, 175, 180, 183, 186) der m n x n Router (30, 40, 130, 140, 150, 160) ineinander geschachtelte Zacken (71-76, 176-178, 181, 182, 184, 185, 187, 188) aufweisen.

4. N x N Router nach einem der vorangehenden Ansprüche,
   **dadurch gekennzeichnet,**
   **daß** der Kamm (67, 68, 175, 180, 183, 186) jedes der m n x n Router (30, 40, 130, 140, 150, 160) Zacken (71-76, 176-178, 181, 182, 184, 185, 187, 188) aufweist, die vollständig von den Zacken der anderen Kämme abgespalten sind.

5. N x N Router nach einem der vorangehenden Ansprüche,
   **dadurch gekennzeichnet,**
   **daß** jeder der m x m Koppler (10, 15, 20, 25, 80, 90, 100) ein achromatischer Koppler mit gleichmäßiger Energieverteilung zwischen seinen Ausgängen (13, 14 18, 19, 23, 24, 28, 29, 85-88, 95-98, 105-108) ist.

6. N x N Router nach einem der Ansprüche, 1 bis 4,
   **dadurch gekennzeichnet,**
   **daß** jeder der m x m Koppler (10, 15, 20, 25, 80, 90, 100) ein Koppler mit Wellenlängenaufteilung ist, der geeignet ist, die Energie eines optischen Signals einer Wellenlänge nur über den Ausgang des m x m Kopplers zu übertragen, der mit dem n x n Router (30, 40, 130, 140, 150, 160) verbunden ist, dessen Kamm (67, 68, 175, 180, 183, 186) diese Wellenlänge umfaßt.

7. N x N Router nach einem der vorangehenden Ansprüche,
   **dadurch gekennzeichnet,**
   **daß** die m x m Koppler (10, 15, 20, 80, 90, 100) aus 2 x 2 Kopplern (10, 15, 20, 111-114) zusammengesetzt sind, von denen jeder zwei Eingänge (11, 12, 16, 17, 21, 22, 26, 27, 81-84, 125-128) und zwei Ausgänge (13, 14, 18, 19, 23, 24, 28, 29, 85-88, 121-124) aufweist.

8. N x N Router nach Anspruch 7,
   **dadurch gekennzeichnet,**
   **daß** er eine erste Ebene von 2 x 2 Kopplern (111,112), dessen Eingänge (81-84) Eingänge (P1-P4) des N x N Routers (2) sind, und eine letzte Ebene von 2 x 2 Kopplern (113,114), dessen Ausgänge (85-88) mit Eingängen (131, 141, 151, 161) der n x n Router (130, 140, 150, 160) verbunden sind, umfaßt, wobei die Eingänge (125-128) der 2 x 2 Koppler (113, 114), die nicht zur ersten Ebene gehören, mit Ausgängen (121-124) von 2 x 2 Kopplern (111, 112) verbunden sind, und wobei die Ausgänge (121-124) der 2 x 2 Koppler (111, 112), die nicht zu der letzten Ebene gehören, mit Eingängen (125-128) der 2 x 2 Koppler (113, 114) verbunden sind.

9. N x N Router nach einem der vorangehenden Ansprüche,
   **dadurch gekennzeichnet,**
   **daß** er Y-Koppler (120) umfaßt, von denen jeder einen Hauptzweig (115) und zwei Sekundärzweige (116, 117) aufweist, wobei die Eingänge (P1-P12) und die Ausgänge (P13-P24) des N x N Routers (2) mit Hauptzweigen (115) der Y-Koppler (120) verbunden sind, wobei der N x N Router (2) es erlaubt, optische Signale gleichzeitig von seinen Eingängen zu seinen Ausgängen sowie von seinen Ausgängen zu seinen Eingängen zu senden, wobei die optischen Signale in entgegengesetzten Richtungen (3, 4) in den Sekundärzweigen (116, 117) jedes der Y-Koppler zirkulieren.

10. N x N Router nach einem der vorangehenden Ansprüche,
**dadurch gekennzeichnet,**
**daß** jeder der n x n Router umfaßt:

- einen Leitungsträger, der eine erste Reihe von n Eingängen und eine zweite Reihe von n Ausgängen umfaßt, wobei die erste Reihe und die zweite Reihe parallel zueinander angeordnet sind und der Leitungsträger eine ebene Leitungsoberfläche aufweist,
- ein Diffraktionselement bezüglich der Leitungsoberfläche,
- eine Fokussieroptik, die zwischen dem Leitungsträger und dem Diffraktionselement angeordnet ist,

wobei das Diffraktionselement und die Fokussieroptik geeignet sind, von irgendeinem der Eingänge ein entsprechendes Bild auf irgendeinen der Ausgänge in Abhängigkeit von der Wellenlänge der optischen Signale zu erzeugen.

11. Verfahren zur optischen Leitweglenkung unter Verwendung eines N x N Routers (1, 2) entsprechend einem der vorangehenden Ansprüche, indem man optische Signale, von denen jedes eine Wellenlänge aufweist, von Eingängen (E1-E8, P1-P12) des N x N Routers zu seinen Ausgängen (S1-S8, P13-P24) schickt,
**dadurch gekennzeichnet,**
**daß**, um gleichzeitig optische Signale von wenigstens zwei von m Eingängen (11, 12, 16, 17, 21, 22, 26, 27, 81-84, 91-94, 101-104) zu wenigstens einem der m x m Koppler (10, 15, 20, 25, 80, 90, 100) in Richtung auf einen gleichen der N Ausgänge (S1-S8, P13-P24) des N x N Routers (1, 2) ohne Störungsrisiko senden zu können, die optischen Signale untereinander verschiedene Wellenlängen haben.

12. Verfahren zur optischen Leitweglenkung nach Anspruch 11,
**dadurch gekennzeichnet,**
**daß** der Ausgang (S1-S8) des N x N Routers (1) einer der n Ausgänge (35 - 38, 45-48) eines der m n x n Router (30, 40) ist und der Kamm (67, 68) des n x n Routers (30, 40) Zacken (71-76) ausweist, wobei die Wellenlängen der optischen Signale in einer der Zacken (71-76) verteilt sind.

13. Verfahren zur optischen Leitweglenkung nach Anspruch 11, **dadurch gekennzeichnet, daß** die Wellenlängen der optischen Signale verschiedene Reihenfolgen haben.

14. Kommunikationsnetz, umfassend wenigstens einen N x N Router (1, 2) nach einem der Ansprüche 1 bis 10

15. Kommunikationsnetz, umfassend wenigstens einen N x N Router (1, 2) zur Ausübung des Verfahrens zur optischen Leitweglenkung nach einem der Ansprüche 11 bis 13.

## Claims

1. An N x N wavelength router (1, 2) comprising N inputs (E1-E8, P1-P12) and N outputs (S1-S8, P13-P24) provided to transmit optical signals each having a wavelength from the inputs to the outputs, the N x N router (1, 2) also comprising switching means capable of directing each of the optical signals from any one of the N inputs to any one of the N outputs according to the wavelength of said signal, the switching means comprising :

   - n m x m couplers (10, 15, 20, 25, 80, 90, 100) each having m inputs (11, 12, 16, 17, 21, 22, 26, 27, 81-84, 91-94, 101-104) et m outputs (13, 14, 18, 19, 23, 24, 28, 29, 85-88, 95-98, 105-108), N being equal to n x m and the N inputs of the n m x m couplers (10, 15, 20, 25, 80, 90, 100) being the inputs (E1-E8, P1-P12) of the N x N router (1,2),
   - m n x n routers (30, 40, 130, 140, 150, 160) each having n inputs (31-34, 41-44, 131-133, 141-143, 151-153, 161-163) and n outputs (35-38, 45-48, 134-136, 144-146, 154-156, 164-166), each of said n inputs being connected to one of the outputs of, respectively, the n m x m couplers (10, 15, 20, 25, 80, 90, 100) and the N outputs of the m n x n routers (30, 40, 130, 140, 150, 160) being the outputs (S1-S8, P13-P24) of the N x N router, each of the n x n routers being capable of switching an optical signal having a wavelength, from any one of its n inputs to any one of its n outputs, according to the wavelenght of said signal, said n x n router (30, 40, 130, 140, 150, 160) having a transmission spectrum (67, 68, 175, 180, 183, 186) according to the wavelength in the form of a series of peaks, **characterized in that** the series of peaks of the m n x n routers are different one another in order to allow a selection according to the wavelength for any one of said N inputs (E1-E8, P1-P12) of the N x N router (1, 2), both one of the m n x n routers and one of the n outputs of said n x n router.

2. An N x N router according to Claim 1, **characterized in that** the transmission spectrum (67, 68, 175, 180, 183, 186) of each of the m n x n routers (30, 40, 130, 140, 150, 160) comprising wavelength bands and each of said bands comprising series of peaks (71-76, 176-178, 181, 182, 184, 185, 187, 188), the transmission spectra of m n x n routers comprise intercalated bands.

3. An N x N router according to Claim 2, wherein the series of peaks (67, 68, 175, 180, 183, 186) of the m n x n routers (30, 40, 130, 140, 150, 160) have their peaks (71-76, 176-178, 181, 182, 184, 185, 187, 188) intercalated.

4. An N x N router according to any one of the previous claims **characterized in that** the series of peaks (67, 68, 175, 180, 183, 186) of the m n x n routers (30, 40, 130, 140, 150, 160) have peaks (71-76, 176-178, 181, 182, 184, 185, 187, 188) which are completely dissociated from peaks of others series of peaks.

5. An N x N router according to any one of the previous claims **characterized in that** each of the m x m couplers (10, 15, 20, 25, 80, 90, 100) is an achromatic coupler with uniform distribution of energy between the outputs thereof (13, 14, 18, 19, 23, 24, 28, 29, 85-88, 95-98, 105-108).

6. An N x N router according to any one of claims 1 to 4, **characterized in that** each of the m x m couplers (10, 15, 20, 25, 80, 90, 100) is a wavelength distribution coupler capable of transmitting the energy of an optical signal having a wavelength, only through the output of said in x m coupler connected to the n x n router (30, 40, 130, 140, 150, 160) whose series of peaks (67, 68, 175, 180, 183, 186) includes said wavelength.

7. An N x N router according to any one of the previous claims **characterized in that** the m x m couplers (10, 15, 20, 80, 90, 100) are made up of 2 x 2 couplers (10, 15, 20, 111-114), each having two inputs (11, 12, 16, 17, 21, 22, 26, 27, 81-84, 125-128) and two outputs (13, 14, 18, 19, 23, 24, 28, 29, 85-88, 121-124).

8. An N x N router according to Claim 7, **characterized in that** it comprises a first level of 2 x 2 couplers (111, 112) whose inputs (81-84) are the inputs (P1-P4) of the N x N router (2), and a final level of 2 x 2 couplers (113-114) whose outputs (85-88) are connected to the inputs (131, 141, 151, 161) of the n x n routers (130, 140, 150, 160), the inputs (125-128) of the 2 x 2 couplers (113, 114) which do not belong to said first level being connected to the outputs (121-124) of 2 x 2 couplers (111, 112) and the outputs (121-124) of the 2 x 2 couplers (111, 112) which do not belong to said final level being connected to the inputs (125-128) of 2 x 2 couplers (113, 114).

9. An N x N router according to any one of the previous claims **characterized in that** it comprises Y couplers (120) each having a main arm (115) and two secondary arms (116, 117), the inputs (P1-P12) and the outputs (P13-P24) of the N x N router (2) being connected to the main arms (115) of said Y couplers (120), said N x N router (2) allowing the sending of optical signals simultaneously from its inputs to its outputs and from its outputs to its inputs, said optical signals circulating in opposite directions (3, 4) in the two secondary arms (116, 117) of each of the Y couplers.

10. An N x N router according to any one of the previous claims **characterized in that** each of the n x n routers comprises :

- a transmission medium comprising a first row of n inputs and a second row of n outputs, the first and second rows being arranged in parallel and the transmission medium having a planar transmission surface,
- a diffracting element positioned opposite said transmission surface,
- a focusing lens positioned between the transmission medium and the diffracting element,

the diffracting element and the focusing lens being capable of producing, from any one of the inputs, an image corresponding to any one of the outputs, according to the wavelength of said optical signals.

11. A method of optical routing carried out by means of an N x N router (1, 2) according to any one of the previous claims, wherein optical signals, each having a wavelength, are sent from the inputs (E1-E8, P1-P12) of the N x N router to its outputs (S1-S8, P13-P24) **characterized in that** to be able to send optical signals simultaneously from at least two of the m inputs (11, 12, 16, 17, 21, 22, 26, 27, 81-84, 91-94-101-104) of at least one of the n m x m couplers (10, 15, 20, 25, 80, 90, 100) in the direction of the same of N outputs (S1-S8, P13-P24) of the N x N router (1, 2) without risk of interference, said optical signals have wavelengths which are distinct one from another.

12. A method of optical routing according to Claim 11, **characterized in that** said output (S1-S8) of the N x N router (1) being one of n outputs (35-38, 45-48) from one of the m n x n routers (30, 40) and the series of peaks (67, 68) of said n x n router (30, 40) having peaks (71-76), the wavelengths of said optical signals are distributed within one of said peaks (71-76).

13. A method of optical routing according to Claim 11, **characterized in that** the wavelengths of said optical signals have distinct orders.

**14.** A communication network comprising at least one N x N router (1, 2) according to any one of claims 1 to 10.

**15.** A communication network comprising at least one N x N router (1, 2) implementing a routing method according to any one of claims 11 to 13.

FIGURE 1A          FIGURE 1B

FIGURE 2

FIGURE 3

FIGURE 4

FIGURE 5

FIGURE 6

FIGURE 7

| 1563,718 | 1562,919 |
|---|---|
| 1562,919 | 1562,119 |

| 1549,307 | 1548,506 |
|---|---|
| 1548,507 | 1547,706 |

1560,319

1538,119

1536,490

| 1549,307 | 1548,507 |
|---|---|
| 1548,506 | 1547,706 |

| 1534,892 | 1534,090 |
|---|---|
| 1534,090 | 1533,288 |

| 1550,916 | | 1549,315 |
|---|---|---|
| | 1549,315 | |
| 1549,315 | 1548,514 | 1547,713 |

FIGURE 8

19